# EUROPEAN PATENT APPLICATION

(11) **EP 4 684 960 A2**
(43) Date of publication of application: **28.01.2026**
(21) Application number: 25222464.7
(22) Date of filing: 26.07.2022
(51) Int. Cl.: B32B 21/00

(54) **DOUBLE BELT PRESS**

(62) Divisional of application: 22754872.4
(71) Applicant: Lignum Technologies AG, 9052 Niederteufen (CH)
(72) Inventor: DEEG, Andreas, 39-300 Mielec (PL)
(74) Representative: Bardehle Pagenberg Partnerschaft mbB Patentanwälte Rechtsanwälte

(57) **Abstract**

Aspects herein relate to a double belt press (10) for the manufacturing of wood-based panels. The double belt press (10) comprises two circumferential metallic forming belts (12, 13), configured to press wood-based components between each other, two circumferential roller beds (14, 1₅) each comprising a plurality of parallel roller rods (16, 1₇), wherein each forming belt (12, 13) is provided with one of the two circumferential roller beds (14, 15), wherein the circumferential roller beds (14, 15) are each adapted to transfer pressure onto the respective forming belt (12, 13), and at least one infeed shaft (20) comprising a guide element (21) with a cylindrical lateral surface (22) that guides the plurality of parallel roller rods (16) of one of the circumferential roller beds (14), wherein the guide element (21) is disc-shaped.

## Description

### 1. Technical field

The present disclosure relates to a double belt press particularly for the manufacturing of wood-based panels.

### 2. Prior art

In the manufacturing of panels and particularly wood-based panels such as particleboard, MDF (medium density fiberboard), OSB (oriented strand board), and/or LVL (laminated veneer lumber), double belt presses are regularly used.

In general, a double belt press comprises two circumferential metallic forming belts. Those two forming belts define a pressing gap. This pressing gap regularly can be adjusted, e.g opened and closed mechanically. The beginning of a material to be processed is clamped and the forming belts then start to run in the same direction at the desired speed, so that a "continuous material" or a piece material is pulled through the pressing gap. At the same time, pressure and often heat is applied to the material from both sides.

Further, double belt presses regularly comprise two circumferential roller beds each comprising a plurality of parallel roller rods. In particular, said circumferential roller beds each comprise a plurality of roller rods being arranged parallel to each other and attached to a chain on the right and left. The two chains are driven via toothed wheels. The toothed wheels are attached laterally to an infeed shaft and an outfeed shaft, respectively. In this way, the roller rods together with the chains also form a revolving belt. The plurality of roller rods or the belt formed thereby lie against the respective metallic forming belt. Particularly, in known presses, each circumferential metallic forming belt is supported in a pressing area by roller rods of the respective circumferential roller bed on support plates which are also referred to as roll-off plates. With the aid of suitable elements, a pressure is exerted on these roll-off plates which is transferred to the pressed material via the roller rods and the circumferential metallic forming belts. Mainly an arrangement of press cylinders is used for this purpose. These press cylinders are usually attached on one side to frames of the press and on the other side to a roll-off plate. On the opposite roll-off plate, a counter means is arranged in the same area, respectively. Said counter means can be realized, for example, by a frame of the press. This allows pressure to be built up or maintained between the roll-off plate in the upper part of the press and the roll-off plate in the lower part of the press with the aid of press cylinders and the counter means.

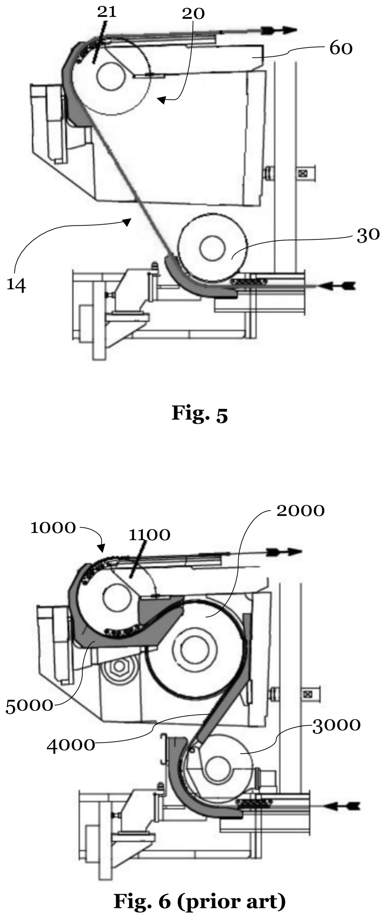

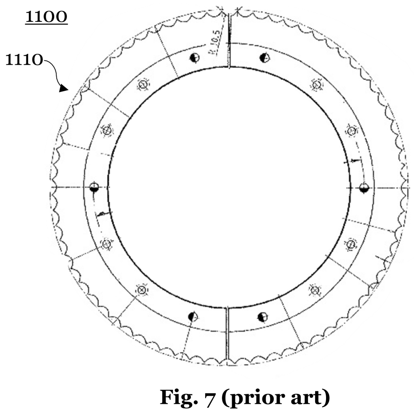

Particularly feeding and guiding the circumferential roller beds with the plurality of parallel roller rods to the pressing area and/or into the pressing area is complicated and often associated with problems. This is outlined in further detail in the following at the example of a prior art design which is depicted in Fig. 6 and Fig. 7. Fig. 6 shows a lower part of a press infeed portion of a prior art double belt press. The depicted lower part of the press infeed portion comprises an infeed shaft 1000 comprising a guide element 1100 which is shown in further detail in Fig. 7. The guide element 1100 serves to guide and feed a circumferential roller bed 4000 into the pressing area. As can be seen in Fig. 7 the guide element 1100 comprises a toothed surface, wherein it is understood that in Fig. 6 the toothed surface is not shown as it is a schematic view. The spaces between the single teeth are configured for receiving roller rods. To ensure that roller rods can be inserted precisely into these spaces, a deflection shaft 2000 is arranged directly in front of the infeed shaft 1000. Prior to the deflection shaft 2000 a further shaft 3000 is arranged for receiving the circumferential roller bed 4000 arriving from the outfeed of the double belt press. This configuration has several disadvantages, as explained in further detail below.

First, the many and/or large contact surfaces between the roller rods and further machine parts promote wear and/or may lead to a high heat input into the shafts, which promotes thermal damage and/or limits the maximum speed.

Second, the configuration is prone to failure as even small inaccuracies in the setting lead to a sharp increase in wear or directly to damage, e.g. of the roller rods and/or the teeth if they do not engage precisely. Accordingly, it is also understood that the described configuration requires a complex setting, which must be performed by an experienced worker. Even further, as depicted in Fig. 6, a comprehensive guiding structure 5000 is often required for the circumferential roller bed 4000.

Third, the system is very sensitive to environmental influences. For example, temperature fluctuations and associated changes in the length of the circumferential roller beds can cause wear to increase.

Thus, it is an object of the present disclosure to provide a double belt press that overcomes the aforementioned drawbacks at least partially.

### 3. Summary of the invention

This object is achieved, at least partly, by a double belt press, as defined in the independent claim. Further aspects of the present disclosure are defined in the dependent claims.

In particular, the object is achieved by a double belt press for the manufacturing of wood-based panels, such as particleboard, MDF (medium density fiberboard), OSB (oriented strand board), and/or LVL (laminated veneer lumber).

The double belt press comprises two circumferential metallic forming belts, configured to press wood-based components between each other. These metallic forming belts may each be driven rotationally by corresponding shafts. Optionally the metallic forming belts are based on a steel material.

Further, the double belt press comprises two circumferential roller beds each comprising a plurality of parallel roller rods. The two circumferential roller beds may each comprise a plurality of roller rods being arranged parallel to each other and attached to a chain on the right and left. The two chains may be driven via toothed wheels being attached laterally to an infeed shaft and/or an outfeed shaft, respectively.

Each forming belt is provided with one of the two circumferential roller beds, wherein the circumferential roller beds are each adapted to transfer pressure onto the respective forming belt. Particularly, each circumferential roller bed may abut against one respective metallic forming belt. Further particularly, each circumferential metallic forming belt may be supported in the pressing area by the respective circumferential roller bed. Moreover, the circumferential roller beds may each be adapted to transfer heat onto the respective forming belt.

The double belt press further comprises at least one infeed shaft comprising a guide element with a cylindrical lateral surface that guides the plurality of parallel roller rods of one of the circumferential roller beds. The at least one infeed shaft may be described as the shaft that feeds the circumferential roller bed into a pressing area of the double belt press. Alternatively, the at least one infeed shaft may be described as the last shaft that contacts the circumferential roller bed before it is transferred into the pressing area of the double belt press. It is understood that the plurality of parallel roller rods may abut the cylindrical lateral surface of the guide element. Thus, the parallel roller rods may be supported and guided by the cylindrical lateral surface of the guide element. In terms of geometric description, the cylindrical lateral surface may also be described as a hollow cylinder with no wall thickness.

The double belt press for the manufacturing of wood-based panels according to the present disclosure has several advantages over the prior art.

First, by the guide element having said cylindrical lateral surface a size of contact surfaces between the roller rods and the guide element is reduced. Exemplarily when compared to guide elements which have teeth and/or other receptacles that partially enclose the roller rods. Due to the reduced size of contact surfaces wear may be reduced. Further a heat input into the guide element and thereby the infeed shaft may be reduced such that thermal damage and/or limitation of the maximum speed of the double belt press may be avoided.

Second, the configuration according to the present disclosure which does not require roller rods to engage with teeth and/or other receptacles of the guide element is less prone to failure as small inaccuracies in the setting do not lead to a sharp increase in wear or directly to damage, as it is exemplarily the case when roller rods engage with teeth. Hence, it is also understood that the described configuration requires a less complex setting.

Third, the system is less sensitive to environmental influences. For example, temperature fluctuations and associated changes in the length of the circumferential roller beds do not cause the wear to increase dramatically as it will be understood from the previous paragraph.

Fourth, by the guide element having said cylindrical lateral surface the number of parts and/or complexity of the double belt press may be reduced. Exemplarily, a deflection shaft being arranged directly in front of the infeed shaft to ensure that roller rods are inserted precisely into spaces between teeth of the guide element can be omitted.

Regarding the advantages described above, it is understood that these can also apply to and be enhanced by the aspects described below.

The guide element may be disc-shaped. According to the present disclosure this may mean that the guide element is a geometric body in the form of a cylinder, wherein a radius of the cylinder is multiple times greater than a thickness of the cylinder.

Optionally the radius of the cylinder is at least five times greater than a thickness of the cylinder. Disc-shaped guide elements have proven to be beneficial as they allow for a locally targeted support and/or increased deflection radii of circumferential roller beds, while at the same time saving weight, e.g. when compared to solid shafts.

A cross section of the cylindrical lateral surface may be a circle. Thereby it is understood that the cross section may be taken in a plane perpendicular to an axis of rotation of the infeed shaft. Further, from the aspect that the cross section of the cylindrical lateral surface may be a circle it is understood that the cylindrical lateral surface may be provided without teeth and/or any other elements protruding from the cylindrical lateral surface.

Moreover, the cylindrical lateral surface may be a smooth surface. Further, from the aspect that the cylindrical lateral surface may be a smooth surface it can be derived that the cylindrical lateral surface may be provided without teeth and/or any other elements protruding from the cylindrical lateral surface.

It is understood that the cross section of the cylindrical lateral surface being a circle and/or the cylindrical lateral surface being a smooth surface has the advantages as described in detail above, namely that exemplarily wear may be reduced, the configuration is less prone to failure, the configuration requires a less complex setting, and is less sensitive to environmental influences.

The cylindrical lateral surface may comprise chamfered and/or rounded edges. This can prevent roller rods from hitting sharp edges. This may further avoid damage and/or wear of the guide element and/or the roller rods.

The cylindrical lateral surface may have a diameter in the range from 100 mm to 900 mm, optionally from 200 mm to 800 mm, further optionally from 300 mm to 700 mm, and even further optionally from 400 mm to 600 mm. These diameters have proven to be advantageous in that they provide sufficiently large deflection radii for the circumferential roller beds to keep wear relatively low and/or to ensure a smooth run, while not unnecessarily increasing the required installation space.

The guide element may be segmented, optionally into two to four segments. For example, the guide element may be a two-part disc that can be separated into two semicircular segments. Segmented guide elements have proven to allow for an improved replacement and/or assembly.

The at least one infeed shaft may comprise a number of guide elements. The number of guide elements may lie in the range from 2 to 12, optionally from 3 to 10, further optionally from 4 to 8, and even further optionally from 5 to 7. These numbers of guide elements have proven to provide sufficient support for most lengths of roller rods being used in double belt presses while at the same time avoiding excess parts.

The double belt press may further comprise a transfer shaft which is arranged to transfer the circumferential roller bed to the guide element, wherein the transfer shaft and the at least one infeed shaft have the same direction of rotation. Optionally the transfer shaft is arranged to transfer the circumferential roller bed directly to the guide element. Hence, it is understood that no further shaft that rotates in the opposite direction than the transfer shaft and the at least one infeed shaft may engage with the circumferential roller bed between the transfer shaft and the at least one infeed shaft. By the transfer shaft and the at least one infeed shaft rotating in the same direction it is understood that a deflection shaft rotating in the other direction and being arranged directly in front of the infeed shaft, e.g. to ensure that roller rods are inserted precisely into spaces between teeth of a guide element as known from the prior art, is omitted. It is understood that this configuration is particularly enabled by the cylindrical lateral surface of the guide element. Thus, the number of parts and/or complexity of the double belt press may be reduced. Further a reduced deflection of the circumferential roller bed may result in decreased wear.

The double belt press may further comprise a support plate arranged in movement direction of the circumferential roller bed behind the guide element. Said support plate may have a support surface for receiving the roller bed from the guide element, wherein the support surface and the cylindrical lateral surface may be essentially flush in the area where the roller bed is received from the guide element. From the feature of the support surface and the cylindrical lateral surface being essentially flush in the area where the roller bed is received from the guide element it may be understood that a line on the cylindrical lateral surface may fall together with the support surface. By this configuration, the roller rods can be taken off the cylindrical lateral surface and transferred to the support surface smoothly and/or evenly. Thus, the double belt press may be operated at higher speeds, e.g. compared to guide elements with teeth. Further, exemplarily, the support surface and the cylindrical lateral surface may be substantially tangential, as this allows for roller rods being taken off and transferred particularly smoothly and/or evenly. Hence, the double belt press may be operated at even higher speeds, e.g. compared to guide elements with teeth. It is understood that the support plate may be a heating plate. Moreover, the support plate may extend into a pressing area of the double belt press.

The support plate may extend against the infeed direction at least up to a vertical axis intersecting a rotational axis of the at least one infeed shaft. Against the infeed direction may be also described as "away from the pressing area". By means of this configuration, the roller rods can be taken off the cylindrical lateral surface smoothly and/or evenly. Thus, the double belt press may be operated at higher speeds, e.g. compared to guide elements with teeth.

The support plate may extend against the infeed direction beyond a vertical axis intersecting a rotational axis of the at least one infeed shaft for a length which lies in a range from a 0.2 to 5, optionally 0.4 to 4, further optionally 0.6 to 3, and even further optionally 0.8 to 2 times a diameter of a roller rod. Said roller rod may be a roller rod of the respective circumferential roller bed. By means of this configuration, the roller rods can be taken off the cylindrical lateral surface even more smoothly and/or evenly. Hence the double belt press may be operated at even higher speeds.

Further, at least one of the pluralities of parallel roller rods may comprise roller rods with a length in a range from 1100 mm to 3600 mm, optionally from 1200 mm to 3500 mm, further optionally from 1300 mm to 3400 mm, and even further optionally from 1400 mm to 3300 mm. These lengths have proven to be advantageous in that they allow for the roller rods to be guided by cylindrical lateral surfaces in a particularly stable manner.

The circumferential roller bed may partially wrap around the guide element, wherein a wrap angle of the circumferential roller bed with the guide element lies in a range from 70° to 180°, optionally from 90° to 160°, further optionally from 110° to 140°, and even further optionally from 120° to 130°. It is understood that a wrap angle of 90° leads to the circumferential roller bed being deflected by 90°. Further, it is understood that a wrap angle of 180° leads to the circumferential roller bed being deflected by 180°. The above ranges of wrap angles have proven to be advantageous in that they provide good guidance for the circumferential roller bed while not unnecessarily increasing the deflection of the circumferential roller bed and/or the contact surface between the circumferential roller bed and the guide element. Accordingly, a sufficient guidance may be obtained while keeping wear moderate.

The guide element may be substantially made from metal, wherein optionally the guide element is substantially made from steel. Steel in particular has proven to be advantageous in that low-wear interaction with guide elements can be achieved.

The cylindrical lateral surface optionally was surface treated by means of surface hardening. It has been shown that surface hardening can not only reduce wear, but also adjust the running properties of the roller rods on the cylindrical lateral surface.

The double belt press may comprise a second infeed shaft comprising a second guide element with a cylindrical lateral surface that guides the plurality of parallel roller rods of a second circumferential roller bed of the two circumferential roller beds. It is understood that the second infeed shaft, the second guide element, and/or the second circumferential roller bed may be configured as at least one infeed shaft, the guide element, and/or the circumferential roller bed as described above. Hence, the advantages described above apply accordingly.

The double belt press may comprise a second transfer shaft which transfers the second circumferential roller bed to the second guide element, wherein the second transfer shaft and the second infeed shaft have the same direction of rotation. It is understood that the second transfer shaft may be configured as the transfer shaft as described above. Hence, the advantages described above apply accordingly.

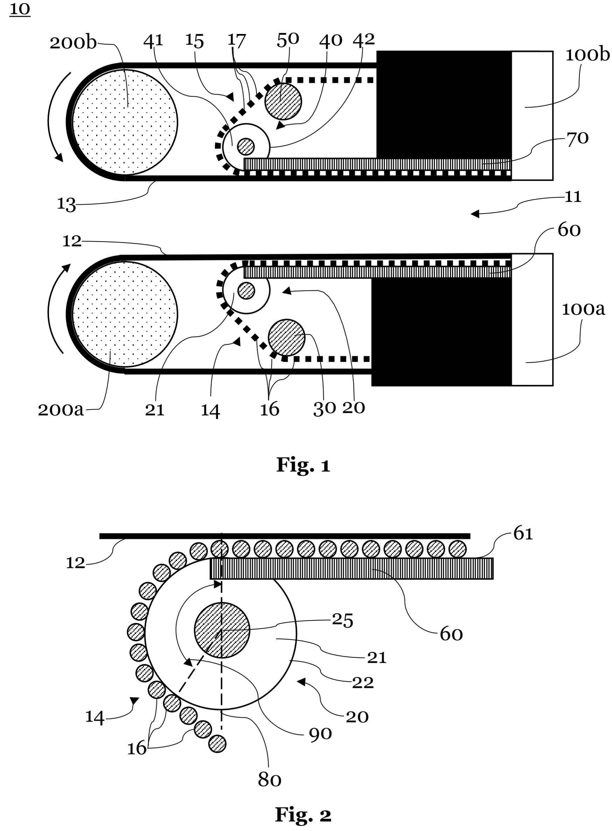

Further, it is understood that the double belt press may comprise a second support plate being configured as the support plate as described above. This aspect will be particularly understood from the subsequent description of figures and particularly of Fig. 1.

### 4. Brief description of the accompanying figures

In the following, the accompanying figures are briefly described:
Fig. 1 shows a double belt press according to the present invention;
Fig. 2 shows a lower part of a press infeed portion of the double belt press according to the present invention;
Fig. 3 shows a cross section of an infeed shaft of the double belt press according to the present invention, wherein the cross section is taken in a plane perpendicular to a rotational axis of the infeed shaft;
Fig. 4 shows a further cross section of the infeed shaft of the double belt press according to the present invention, wherein the cross section is taken in a plane parallel to the rotational axis of the infeed shaft;
Fig. 5 shows a lower part of a press infeed portion of another double belt press according to the present invention, and
Fig. 6 shows a lower part of a press infeed portion of a prior art double belt press, and
Fig. 7 shows a prior art guide element of said prior art double belt press.

### 5. Detailed description of the figures

Fig. 1 shows a double belt press 10 for the manufacturing of wood-based panels in a schematic view. Since the double belt press cannot be shown in its entirety in the same level of detail, the reference signs 100a, 100b are placeholders for the further components of the double belt press 10.

The double belt press 10 of Fig. 1 comprises two circumferential metallic forming belts 12, 13, which are configured to press wood-based components between each other. Between the circumferential metallic forming belts 12, 13 a pressing area 11 which may be also referred to as pressing gap 11 is located. The metallic forming belts 12, 13 are each arranged on a shaft, wherein those shafts are provided with reference signs 200a, 200b.

The double belt press 10 further comprises two circumferential roller beds 14, 15 each comprising a plurality of parallel roller rods 16, 17.

As can be further seen in Fig. 1, each forming belt 12, 13 is provided with one of the two circumferential roller beds 14, 15, wherein the circumferential roller beds 14, 15 are each adapted to transfer pressure onto the respective forming belt 12, 13. Particularly, the circumferential roller beds 14, 15 lie against the respective metallic forming belt 12, 13. Moreover, each circumferential metallic forming belt 12, 13 is supported in the pressing area 11 by the respective circumferential roller bed 14, 15.

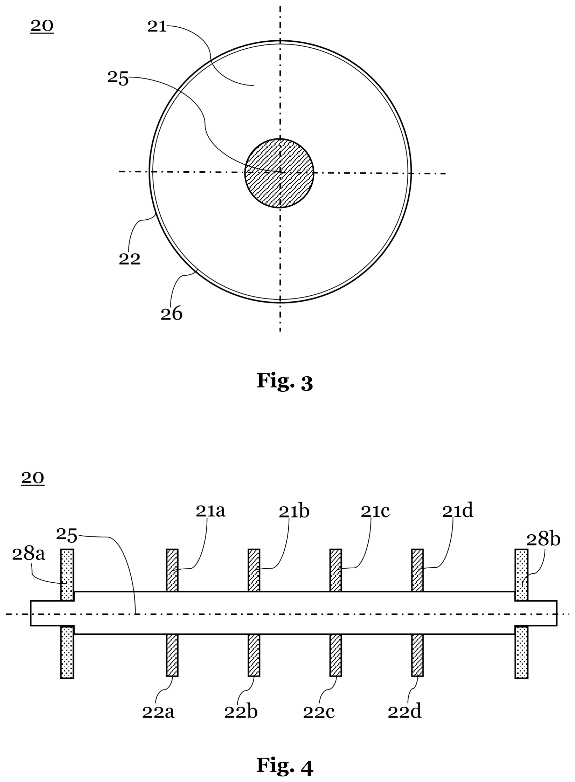

Furthermore, the depicted double belt press 10 comprises a first infeed shaft 20 comprising a first guide element 21 with a cylindrical lateral surface 22 that guides the plurality of parallel roller rods 16 of a first 14 of the two circumferential roller beds 14, 15. The aspect that the first guide element 21 has a cylindrical lateral surface 22 is particularly illustrated in Fig. 2 and 3.

Furthermore, the double belt press 10 comprises a first transfer shaft 30 which is arranged to transfer the first circumferential roller bed 14 to the first guide element 21, wherein the first transfer shaft 30 and the first infeed shaft 20 have the same direction of rotation. This aspect may be also derived from Fig. 5.

Besides the first infeed shaft 20 the double belt press 10 comprises a second infeed shaft 40 comprising a second guide element 41 with a cylindrical lateral surface 42 that guides the plurality of parallel roller rods 17 of a second circumferential roller bed 15 of the two circumferential roller beds 14, 15.

Even further the double belt press 10 of Fig. 1 comprises a second transfer shaft 50 which transfers the second circumferential roller bed 15 to the second guide element 41, wherein the second transfer shaft 50 and the second infeed shaft 40 have the same direction of rotation.

Fig. 2 shows a lower part of a press infeed portion of the double belt press 10, where it can be seen that the double belt press 10 further comprises a first support plate 60 arranged in movement direction of the first circumferential roller bed 14 behind the first guide element 21. The first support plate 60 has a support surface 61 for receiving the first circumferential roller bed 14 from the first guide element 21, wherein the support surface 61 and the cylindrical lateral surface 22 are essentially flush in the area where the first circumferential roller bed 14 is received from the first guide element 21. From Fig. 1 it is understood that the double belt press 10 further comprises a second support plate 70 arranged in movement direction of the second circumferential roller bed 15 behind the second guide element 41. The second support plate 70 is configured and arranged as the first support plate 60.

Further in Fig. 2 is shown in detail that the first support plate 60 extends against the infeed direction at least up to a vertical axis 80 intersecting a rotational axis 25 of the first infeed shaft 20. Particularly the first support plate 60 extends against the infeed direction beyond a vertical axis 80 intersecting the rotational axis 25 of the first infeed shaft 20 for a length which lies in a range from a 0.5 to 0.7 times a diameter of a roller rod of the plurality of parallel roller rods 16 of the first 14 of the two circumferential roller beds 14, 15.

As also illustrated in Fig. 2, the first circumferential roller bed 14 partially wraps around the first guide element 21, wherein a wrap angle 90 of the first circumferential roller bed 14 with the first guide element 21 lies in a range from 135° to 170°.

As shown in Fig. 3 a cross section of the cylindrical lateral surface 22 is a circle. Thereby the cylindrical lateral surface 22 comprises a chamfered edge 26.

Further, from Fig. 3 it is understood that the cylindrical lateral surface 22 is a smooth surface, i.e. without teeth or any other protruding elements. Moreover from Fig. 3 together with Fig. 4 it is understood that the first guide element 21, i.e. the first guide elements 21a, 21b, 21c, 21d is/are disc-shaped.

As depicted in Fig. 4, the first infeed shaft 20 comprises four mounted guide elements 21a, 21b, 21c, 21d. Further, in Fig. 4 toothed wheels 28a, 28b are provided on the infeed shaft 20. These toothed wheels 28a, 28b may engage with chains of the circumferential roller bed 14.

In the following, further inventive embodiments are described to facilitate understanding of the invention:
Embodiment 1. A double belt press (10) for the manufacturing of wood-based panels, the double belt press (10) comprising
   two circumferential metallic forming belts (12, 13), configured to press wood-based components between each other;
   two circumferential roller beds (14, 15) each comprising a plurality of parallel roller rods (16, 17);
   wherein each forming belt (12, 13) is provided with one of the two circumferential roller beds (14, 15), wherein the circumferential roller beds (14, 15) are each adapted to transfer pressure onto the respective forming belt (12, 13), and
   characterized in that the double belt press (10) further comprises
   at least one infeed shaft (20) comprising a guide element (21) with a cylindrical lateral surface (22) that guides the plurality of parallel roller rods (16) of one of the circumferential roller beds (14).
Embodiment 2. The double belt press (10) according to the preceding embodiment, wherein the guide element (21) is disc-shaped.
Embodiment 3. The double belt press (10) according to any one of the preceding embodiments, wherein a cross section of the cylindrical lateral surface (22) is a circle.
Embodiment 4. The double belt press (10) according to any one of the preceding embodiments, wherein the cylindrical lateral surface (22) is a smooth surface.
Embodiment 5. The double belt press (10) according to any one of the preceding embodiments, wherein the cylindrical lateral surface (22) comprises chamfered and/or rounded edges (26).
Embodiment 6. The double belt press (10) according to any one of the preceding embodiments, wherein the cylindrical lateral surface (22) has a diameter in the range from 100 mm to 900 mm, optionally from 200 mm to 800 mm, further optionally from 300 mm to 700 mm, and even further optionally from 400 mm to 600 mm.
Embodiment 7. The double belt press (10) according to any one of the preceding embodiments, wherein the guide element (21) is segmented, optionally into two to four segments.
Embodiment 8. The double belt press (10) according to any one of the preceding embodiments, wherein the at least one infeed shaft (20) comprises a number of guide elements (21a, 21b, 21c, 21d), wherein the number of guide elements lies in the range from 2 to 12, optionally from 3 to 10, further optionally from 4 to 8, and even further optionally from 5 to 7.
Embodiment 9. The double belt press (10) according to any one of the preceding embodiments, wherein the double belt press (10) comprises
   a transfer shaft (30) which is arranged to transfer the circumferential roller bed (14) to the guide element (21), wherein the transfer shaft (30) and the at least one infeed shaft (20) have the same direction of rotation.
Embodiment 10. The double belt press (10) according to any one of the preceding embodiments, wherein the double belt press (10) further comprises
   a support plate (60) arranged in movement direction of the circumferential roller bed (14) behind the guide element (21), wherein the support plate (60) has a support surface (61) for receiving the roller bed (14) from the guide element (21), wherein the support surface (61) and the cylindrical lateral surface (22) are essentially flush in the area where the roller bed (14) is received from the guide element (21).
Embodiment 11. The double belt press (10) according to the preceding embodiment, wherein the support plate (60) extends against the infeed direction at least up to a vertical axis (80) intersecting a rotational axis (25) of the at least one infeed shaft (20).
Embodiment 12. The double belt press (10) according to one of embodiments 10 or 11, wherein the support plate (60) extends against the infeed direction beyond a vertical axis (80) intersecting a rotational axis of the at least one infeed shaft (20) for a length which lies in a range from a 0.2 to 5, optionally 0.4 to 4, further optionally 0.6 to 3, and even further optionally 0.8 to 2 times a diameter of a roller rod.
Embodiment 13. The double belt press (10) according to any one of the preceding embodiments, wherein at least one of the pluralities of parallel roller rods (16, 17) comprise roller rods with a length in a range from 1100 mm to 3600 mm, optionally from 1200 mm to 3500 mm, further optionally from 1300 mm to 3400 mm, and even further optionally from 1400 mm to 3300 mm.
Embodiment 14. The double belt press (10) according to any one of the preceding embodiments, wherein the circumferential roller bed (14) partially wraps around the guide element (21), wherein a wrap angle (90) of the circumferential roller bed (14) with the guide element (21) lies in a range from 70° to 180°, optionally from 90° to 160°, further optionally from 110° to 140°, and even further optionally from 120° to 130°.
Embodiment 15. The double belt press (10) according to any one of the preceding embodiments, wherein the guide element (21) is substantially made from metal, wherein optionally the guide element (21) is substantially made from steel.
Embodiment 16. The double belt press (10) according to the preceding embodiment, wherein the cylindrical lateral surface (22) was surface treated by means of surface hardening.
Embodiment 17. The double belt press (10) according to any one of the preceding embodiments, wherein the double belt press (10) comprises
   a second infeed shaft (40) comprising a second guide element (41) with a cylindrical lateral surface (42) that guides the plurality of parallel roller rods (17) of a second circumferential roller bed (15) of the two circumferential roller beds (14, 15).
Embodiment 18. The double belt press (10) according to the preceding embodiment, wherein the double belt press (10) comprises
   a second transfer shaft (50) which transfers the second circumferential roller bed (15) to the second guide element (41), wherein the second transfer shaft (50) and the second infeed shaft (40) have the same direction of rotation.

### List of reference signs

- 10: double belt press
- 11: pressing gap/pressing area
- 12, 13: metallic forming belts
- 14, 15: circumferential roller beds
- 16, 17: pluralities of parallel roller rods

- 20: first infeed shaft
- 21: first guide element
- 22: cylindrical lateral surface of the first guide element
- 25: rotational axis of the first infeed shaft
- 26: chamfer
- 28a, 28b: toothed wheels
- 30: first transfer shaft

- 40: second infeed shaft
- 41: second guide element
- 42: cylindrical lateral surface of the second guide element
- 50: second transfer shaft

- 60: first support plate
- 61: support surface
- 70: second support plate
- 80: vertical axis
- 90: wrap angle

- 100a, 100b: placeholder for the further double belt press
- 200a, 200b: shafts of the metallic forming belts

- 1000: prior art infeed shaft
- 1100: prior art guide element
- 2000: prior art deflection shaft
- 3000: prior art shaft
- 4000: prior art circumferential roller bed
- 5000: prior art guiding structure

## Claims

1. A double belt press (10) for the manufacturing of wood-based panels, the double belt press (10) comprising
two circumferential metallic forming belts (12, 13), configured to press wood-based components between each other;
two circumferential roller beds (14, 15) each comprising a plurality of parallel roller rods (16, 17);
wherein each forming belt (12, 13) is provided with one of the two circumferential roller beds (14, 15), wherein the circumferential roller beds (14, 15) are each adapted to transfer pressure onto the respective forming belt (12, 13), and
at least one infeed shaft (20) comprising a guide element (21) with a cylindrical lateral surface (22) that guides the plurality of parallel roller rods (16) of one of the circumferential roller beds (14);
wherein the guide element (21) is disc-shaped.

2. The double belt press (10) according to claim 1, wherein the guide element (21) is a geometric body in a form of a cylinder.

3. The double belt press (10) according to claim 2, wherein a radius of the cylinder is multiple times greater than a thickness of the cylinder; preferably wherein the radius of the cylinder is at least five times greater than a thickness of the cylinder.

4. The double belt press (10) according to any one of the preceding claims, wherein:
a cross section of the cylindrical lateral surface (22) is a circle; and/or
the cylindrical lateral surface (22) is a smooth surface.

5. The double belt press (10) according to any one of the preceding claims, wherein:
the cylindrical lateral surface (22) comprises chamfered and/or rounded edges (26); and/or
the cylindrical lateral surface (22) has a diameter in the range from 100 mm to 900 mm, optionally from 200 mm to 800 mm, further optionally from 300 mm to 700 mm, and even further optionally from 400 mm to 600 mm; and/or
the guide element (21) is segmented, optionally into two to four segments.

6. The double belt press (10) according to any one of the preceding claims, wherein the at least one infeed shaft (20) comprises a number of guide elements (21a, 21b, 21c, 21d), wherein the number of guide elements lies in the range from 2 to 12, optionally from 3 to 10, further optionally from 4 to 8, and even further optionally from 5 to 7.

7. The double belt press (10) according to any one of the preceding claims, wherein the double belt press (10) comprises a transfer shaft (30) which is arranged to transfer the circumferential roller bed (14) to the guide element (21), wherein the transfer shaft (30) and the at least one infeed shaft (20) have the same direction of rotation.

8. The double belt press (10) according to any one of the preceding claims, wherein the double belt press (10) further comprises a support plate (60) arranged in movement direction of the circumferential roller bed (14) behind the guide element (21), wherein the support plate (60) has a support surface (61) for receiving the roller bed (14) from the guide element (21), wherein the support surface (61) and the cylindrical lateral surface (22) are essentially flush in the area where the roller bed (14) is received from the guide element (21).

9. The double belt press (10) according to the preceding claim, wherein the support plate (60) extends against the infeed direction at least up to a vertical axis (80) intersecting a rotational axis (25) of the at least one infeed shaft (20).

10. The double belt press (10) according to claim 8 or 9, wherein the support plate (60) extends against the infeed direction beyond a vertical axis (80) intersecting a rotational axis of the at least one infeed shaft (20) for a length which lies in a range from a 0.2 to 5, optionally 0.4 to 4, further optionally 0.6 to 3, and even further optionally 0.8 to 2 times a diameter of a roller rod.

11. The double belt press (10) according to any one of the preceding claims, wherein at least one of the pluralities of parallel roller rods (16, 17) comprise roller rods with a length in a range from 1100 mm to 3600 mm, optionally from 1200 mm to 3500 mm, further optionally from 1300 mm to 3400 mm, and even further optionally from 1400 mm to 3300 mm.

12. The double belt press (10) according to any one of the preceding claims, wherein the circumferential roller bed (14) partially wraps around the guide element (21), wherein a wrap angle (90) of the circumferential roller bed (14) with the guide element (21) lies in a range from 70° to 180°, optionally from 90° to 160°, further optionally from 110° to 140°, and even further optionally from 120° to 130°.

13. The double belt press (10) according to any one of the preceding claims, wherein the guide element (21) is substantially made from metal, wherein optionally the guide element (21) is substantially made from steel;
preferably wherein the cylindrical lateral surface (22) was surface treated by means of surface hardening.

14. The double belt press (10) according to any one of the preceding claims, wherein the double belt press (10) comprises a second infeed shaft (40) comprising a second guide element (41) with a cylindrical lateral surface (42) that guides the plurality of parallel roller rods (17) of a second circumferential roller bed (15) of the two circumferential roller beds (14, 15).

15. The double belt press (10) according to the preceding claim, wherein the double belt press (10) comprises a second transfer shaft (50) which transfers the second circumferential roller bed (15) to the second guide element (41), wherein the second transfer shaft (50) and the second infeed shaft (40) have the same direction of rotation.
